# EUROPEAN PATENT SPECIFICATION

(11) **EP 0 379 039 B1**
(45) Date of publication and mention of the grant of the patent: **15.03.1995**
(21) Application number: 90100390.5
(22) Date of filing: 09.01.1990
(51) Int. Cl.: C08L 69/00, C08L 51/04

(54) **Mixtures based on styrene copolymers having improved mechanical characteristics**
Mischungen auf Basis von Styrolcopolymeren mit verbesserten mechanischen Eigenschaften
Mélanges à base de copolymères de styrène ayant des caractéristiques mécaniques modifiées

(30) Priority: 10.01.1989 IT 1904689
(43) Date of publication of application: 25.07.1990
(73) Proprietor: ENICHEM S.p.A., 20124 Milano (IT)
(72) Inventor: Fasulo, Gian Claudio, I-46010 S.Silvestro da Curtatone Mantova (IT); Ghidoni, Dario, I-46023 Gonzaga, Mantova (IT); Licon, Andrea, I-46047 Porto Mantovano, Mantoa (IT)
(74) Representative: Weinhold, Peter, Dr.

(56) References cited:
- EP-A- 0 131 188
- EP-A- 0 216 065
- EP-A- 0 230 604
- EP-A- 0 277 835

## Description

The present invention relates to mixtures based on vinyl aromatic copolymers having improved mechanical characteristics.

More specifically, the present invention relates to mixtures based on vinyl-aromatic polymers having a high isotropy, said mixtures being particularly suitable for injection molding and thermoforming of molded articles having high tenacity also in the flow joining areas.

As it is known, impact-resistant styrene copolymers are obtainable by bulk-polymerization or bulk-suspension polymerization of solutions of polybutadiene or styrene-butadiene rubbers, of saturated rubbers of the ethylene-propylene type (EPM) or of rubbers based on ethylene/propylene/non-conjugated diene (EPDM), in styrene(alone or in admixture with other ethylenically unsaturated polymerizable monomers).

In particular, the impact-resistant styrene copolymers containing an ethylenically unsaturated nitrile and being based on EPM or EPDM rubber, generally known as AES polymes, usually are obtained in the form of concentrates having a high rubber content and are utilized either as such or in admixture with other polymers in order to obtain products suitable for injection molding, extrusion and thermoforming and endowed with the desired properties.

In fact, the AES copolymers exhibit excellent impact strength, but their low thermal stability and stiffness render them unsuitable for certain applications.

In order to obviate this shortcoming of the AES copolymers it is known to prepare mixtures thereof with other polymers having the above properties. It is known, in fact, to blend the styrene copolymers based on EPM or EPDM rubber and acrylonitrile with a separately prepared styrene-acrylonitrile resin (SAN), as it is described in US-A- 3,489,821; 3,849,518; 3,676,528 and 4,202,948.

European patent application No. 88 300 956 describes a mixture comprising 10-90% by weight of a styrene/ethylenically unsaturated nitrile/olefinic elastomer copolymer and 90-10% by weight of a mixture of resins containing aromatic groups, consisting of 70-99% by weight of polycarbonate and of 30-1% by weight of aromatic polyester.

JP-A-51-24540 describes a thermoplastic composition comprising 90-10% of styrene-acrylonitrile-EPM or EPDM rubber copolymer and 10-90% of polycarbonate.

Although these mixtures are satisfactory for applications in which high impact strength, thermal stability, resistance to chemical agents or to decoloring are required, they exhibit some shortcomings which limit the use thereof. Said shortcomings are mainly due to the low compatibility of the styrene copolymer with the other polymers which are utilized to compensate the lacking properties of said copolymer.

In particular, the mixtures consisting of a styrene copolymer of the AES type and a polycarbonate exhibit a strong anisotropy of the resilience characteristics as well as an insufficient mechanical resistance especially in the flow joining areas owing to the low compatibility between these two polymers.

It has now surprisingly been found that it is possible to prepare homogeneous polymeric compositions containing a styrene copolymer of the AES type and a polycarbonate by using, as a compatibilizing agent for the polycarbonate and the styrene copolymer, a graft-copolymer with an elastomeric core having a glass transition temperature lower than 10°C onto which vinyl monomer chains are grafted.

Thus, the subject matter of the present invention are mixtures based on styrene copolymers, comprising (a) an impact-resistant styrene copolymer containing from 2 to 35% by weight of at least one ethylenically unsaturated nitrile, from 20 to 40% by weight of at least one olefinic elastomer having a iodine number higher than 5 and up to 40, and from 15 to 73% by weight of at least one styrene monomer, (b) an aromatic polycarbonate in a weight ratio of styrene copolymer to polycarbonate of from 10:90 to 90:10 and, as compatibilizing agent, (c) from 1 to 20% by weight, based on the mixture, of a graft-copolymer having an elastomeric core with a second order glass transition temperature (Tg) lower than 10°C being selected from polybutadiene and copolymers of butadiene with styrene, isoprene and/or acrylonitrile wherein the butadiene content is higher than 40% by moles, onto which vinyl monomer chains are grafted.

Preferably, the mixtures of the present invention comprise (a) an impact-resistant styrene copolymer containing from 10 to 35% by weight of at least one ethylenically unsaturated nitrile, from 20 to 40% by weight of at least one olefinic elastomer having a iodine number higher than 5 and up to 40, and from 25 to 70% by weight of at least one styrene monomer, (b) an aromatic polycarbonate in a weight ratio of styrene copolymer to polycarbonate of from 70:30 to 30:70 and (c) from 3 to 10% by weight, based on the mixture, of a graft-copolymer with an elastomeric core having a second order glass transition temperature (Tg) lower than 10°C being selected from polybutadiene and copolymers of butadiene with styrene, isoprene and/or acrylonitrile wherein the butadiene content is higher than 40% by moles, onto which vinyl monomer chains are grafted.

In the impact-resistant styrene copolymer which is utilized in the composition of the present invention the elastomeric component (which is the substrate onto which the ethylenically unsaturated nitrile and the styrene monomer are in part grafted and in part are made to physically adhere in the form of an ethylenically unsaturated nitrile/styrene copolymer) generally is a rubber-like copolymer (preferably having a Mooney viscosity ranging front 10 to 150 ML-4 at 100°C) of at least two different straight chain (preferably C₁₋₈-)alpha-monoolefins such as ethylene, propylene, butene-1, octene-1 and the like, with at least one other copolymerizable monomer, generally a polyene, and typically a non-conjugated diene. Preferably, one of the alpha-monoolefins is ethylene which is present together with another alpha-monoolefin having a longer chain. The weight ratio of ethylene to the other alpha-monoolefin(s) in the rubber-like copolymer usually is in the range of from 20/80 to 80/20. Particularly preferred copolymers are the ethylene/propylene/non-conjugated diene terpolymers wherein the non-conjugated diene may be cyclic or acyclic. Examples of suitable dienes are: 5-methylene-2-norbornene; 5-ethylidene-2-norbornene; 5-isopropylene-2-norbornene; pentadiene-1,4; hexadiene-1,4; hexadiene-1,5; heptadiene-1,5; dodecatriene-1,7,9; methyl-heptadiene-1,5; norbornadiene-2,5; cyclooctadiene-1,5; dicyclopentadiene; tetrahydroindene; 5-methyl-tetrahydroindene, etc. The diene content preferably ranges from about 5 to about 20% by weight and particularly from about 8 to about 18% by weight of diene monomer units in the rubber-like terpolymer.

Particularly favourable results are obtained by using a rubber-like terpolymer having a Mooney viscosity (ML-4), measured at 100°C, of from 30 to 90 and a iodine number higher than 5, preferably ranging from 10 to 40.

The term "styrene monomer", whenever used in the present specification and in the claims, comprises ethylenically unsaturated compounds having the general formula : 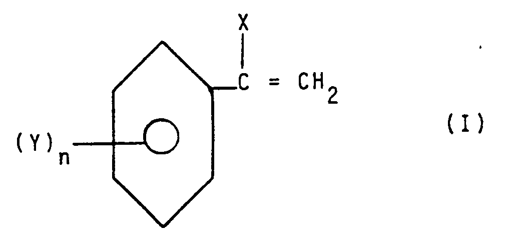
wherein:
- X: is hydrogen or an alkyl radical having 1 to 4 carbon atoms (e.g. methyl and ethyl);
- Y: is hydrogen, halogen (e.g. Cl, Br, I and F) or an alkyl radical having 1 to 4 carbon atoms (e.g. methyl, ethyl, propyl and butyl) and
- n: is 0 or an integer from 1 to 5.

Examples of vinyl-aromatic monomers of the above general formula are : styrene; methyl-styrene; mono-, di-, tri-, tetra- and penta-chloro-styrene and the corresponding alpha-methyl-styrenes; nucleus-alkylated styrenes and the corresponding alpha-methyl-styrenes such as ortho- and para-methyl-styrenes; ortho- and para-ethyl-styrenes; ortho- and para-methyl-alpha-methyl-styrenes, etc.

These monomers are utilizable individually or in admixture with one another.

The term "ethylenically unsaturated nitrile" in the first place and preferably denotes acrylonitrile, although other acrylic monomers such as methacrylonitrile, acrylic acid, methacrylic acid and (preferably C₁₋₄-)alkyl-esters of acrylic or methacrylic acid can also be used.

Examples of copolymerization methods for obtaining the impact-resistant styrene copolymers utilizable in the mixtures of the present invention are described in Italian patent No. 792,269 and in US-A-3,819,765; 3,489,822; 3,642,950 and 3,849,518, the contents whereof are included herein by reference.

It is to be understood that in the graft-copolymerization not the whole monomer forming the resin is grafted onto the rubber-like core; a part of the monomer forms a free resin, which is present in physical mixture with the graft-copolymer. The amount of grafted monomer in the copolymer can be determined by extracting the product with a solvent for the non-grafted resin.

The aromatic polycarbonates employable in the mixtures of the present invention can be homopolymers and copolymers based, for example, on one or more of the following bisphenols : di-hydroxy-diphenyls, bis-(hydroxyphenyl)-alkanes, bis-(hydroxyphenyl)-cycloalkanes, bis-(hydroxyphenyl)-sulphides, bis-(hydroxyphenyl)-ethers, bis-(hydroxyphenyl)-ketones, bis-(hydroxyphenyl)-sulphoxides, bis-(hydroxyphenyl)sulphones, alpha-alpha-bis-(hydroxyphenyl)-diisopropyl benzenes and also their nucleus-alkylated or nucleus-halogenated derivatives. These and other aromatic dihydroxy compounds are well known and described in the literature.

Preferred bisphenols are those which correspond to formula (II): 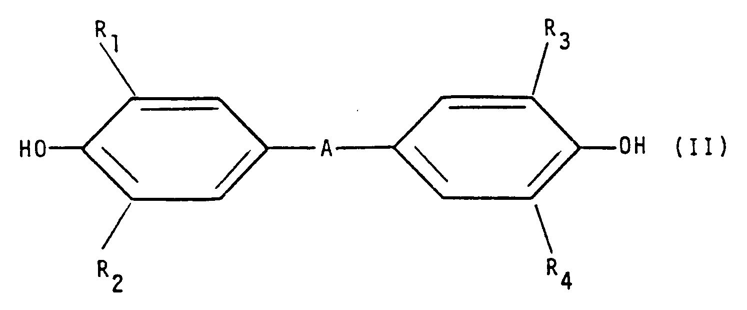
wherein
each of R₁,R₂,R₃ and R₄ independently represents hydrogen, an alkyl radical containing from 1 to 4 carbon atoms or halogen; and A represents -O-, -CO-, -SO₂-, an alkylene radical containing 2 to 10 carbon atoms, an alkylidene radical containing from 2 to 10 carbon atoms, a cycloalkylene radical containing from 5 to 15 carbon atoms, a cycloalkylidene radical containing from 5 to 15 carbon atoms or the radical : 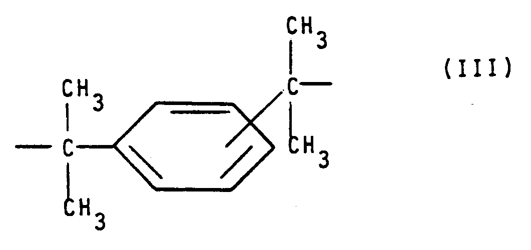
Particularly preferred bisphenols are, for example, 2,2-bis-(4-hydroxyphenyl)-propane; 2,2-bis-(3,5-dimethyl-4-hydroxyphenyl)propane; 2,2-bis-(3,5-dichloro-4-hydroxyphenyl)-propane; 2,2-bis-(3,5-dibromo-4-hydroxyphenyl)-propane and 1,1-bis-(4-hydroxyphenyl)-cyclohexane. Particularly preferred polycarbonates are the ones based on one or more of the above bisphenols. In particular, the polycarbonates based on 2,2-bis-(4-hydroxyphenyl)-propane and 2,2-bis-(3,5-dimethyl-4-hydrophenyl)-propane,alone or in admixture with one another or with one of the remaining bisphenols above, are preferred.

Polycarbonates containing in the chain units derived from terephthalic and/or isophthalic acid are utilizable as well.

The aromatic polycarbonates can be prepared according to known methods, for example by transesterification in the molten state from bisphenols and diphenyl-carbonate, and by the two-phase interface process from bisphenol and phosgene, as described in H. Schnell "Chemistry and Physics of Polycarbonates" Interscience Publisher, New York, 1964.

The aromatic polycarbonates can also be of the branched type, due to the incorporation of small amounts, preferably from 0.05 to 2 percent by moles, of compounds having three or more functional groups, in particular having three or more phenolic hydroxy groups.

The aromatic polycarbonates which may be utilized in the mixtures of the present invention generally have an average molecular weight of at least about 10,000, more particularly from about 10,000 to about 200,000 and preferably from about 20,000 to about 80,000, as determined by measuring the relative viscosity in CH₂Cl₂ at 25°C and at a concentration of 0.5% by weight.

The aromatic polycarbonates containing repeating units (II) are well known in the art and are available from several manufacturers, for example: General Electric Company, Pittfield, Mass., USA, under the name "LEXAN®"; ANIC, S. Donato Milanese (Milan), under the name "SIN-VET®"; Proquigel (Brazil), under the name "DUROLON®", etc.

The graft-copolymer which is used to make the impact-resistant styrene copolymer compatible with the aromatic polycarbonate is a polymer of the "core-shell" type, comprising an elastomeric core having grafted thereon chains of vinyl monomers.

Preferably, the core-shell polymer comprises from about 25 to about 95% by weight of the first elastomeric stage and from about 75 to about 5% by weight of grafted chains of vinyl monomers.

The elastomeric core has a second order glass transition temperature lower than 10°C and it may be selected from, e.g., polybutadiene and copolymers of butadiene with styrene, isoprene and/or acrylonitrile wherein the butadiene content is higher than 40% by moles.

The vinyl monomers which are grafted onto the elastomeric core can be acrylic acid derivatives or methacrylic acid derivatives, vinyl-aromatic compounds, vinyl-cyanide compounds and polyfunctional derivatives, either individually or in admixture with one another. Specific examples of these grafted vinyl monomers comprise methacrylic acid C₁₋₁₆-alkyl esters, preferably methyl methacrylate, esters of methacrylic acid with polyfunctional alcohols such as 1,3-butylenglycol dimethacrylate and trimethylol-propane-trimethacrylate, diallyl methacrylate and/or diallyl methacrylate; vinyl-aromatic compounds such as styrene, vinyl toluene, alpha-methyl styrene, halogenated styrene, vinyl naphthalene or divinyl benzene, styrene being particularly preferred; vinyl cyanide compounds such as acrylonitrile, methacrylonitrile, alpha-halogenated acrylonitriles; acrylonitrile being particularly preferred; maleic acid and maleic anhydride.

These vinyl monomers can be used separately or in mixture.

The graft-copolymer used in the mixtures of the present invention preferably has a second order glass transition temperature lower than -10°C and even lower than -50°C and a cross-linking degree of at least about 50% and up to about 99% by weight (gel content), determined by extraction.

The graft- copolymer used in the mixtures of the present invention preferably has an elastomer content of at least about 35% and up to about 95% by weight.

These copolymers are preparable by means of any known method such as bulk polymerization, suspension polymerization, bulk-suspension polymerization, solution polymerization or emulsion polymerization. In the preparation of the graft- copolymer, a homopolymer or copolymer of the vinyl monomer can directly be formed in the reaction product, or the reaction product as such can be used as a grafted polymer.

A typical example of a graft-copolymer to be used in the mixture of the invention is a three-stage polymer having a rubber-like core based on butadiene, a second stage polymerized from styrene and a final stage, or shell, polymerized from methyl methacrylate and 1,3-butylene glycol dimethacrylate.

The above graft-copolymers are well known and are available from many manufacturers such as, for example, Rohm & Haas Company, Philadelphia, USA, under the name Paraloid® EXL 2607 or Paraloid® EXL 3607.

The mixtures of the present invention can be prepared by means of hot mixing in any known mixing unit, such as single-screw or double-screw extruders, Banbury mixers, mixing rolls etc. at a temperature ranging from 200 to 300°C.

The compositions may contain stabilizers, UV stabilizers or other additives intimately incorporated therein, such as plasticizers, lubricants, antiflame agents, flow agents, antistatic agents, dyes, pigments, glass fibres or other inorganic fillers etc., in order to impart particular characteristics to the material.

The mixtures of the present invention may easily be processed and exhibit a complex of properties which make them suitable for use in the production of articles endowed with a high tenacity, in particular in the flow joining areas, along with a high impact strength and thermal stability. The fields of use of said mixtures, therefore, are the automotive sector, the sectors of household electric apparatus and appliances, of electronics and technical articles in general in the form of films, sheets, strips,panels, bands, rods, boxes, pans, containers and the like. The mixtures can be used to produce foamed articles by means of conventional techniques.

The following examples are given in order to illustrate the present invention without being a limitation of embodiments thereof.

### Examples 1-5

By means of a double-screw extruder(WERNER ZSK 53), under degassing and at a temperature of 220-290°C, mixtures were extruded which consisted of :
a) an impact-resistant styrene copolymer consisting of 57% by weight of styrene, 18% by weight of acrylonitrile and 25% of EPDM rubber having a Mooney viscosity of 62-72 ML-4 at 100°C and a iodine number equal to 18;
b) polycarbonate produced by Proquigel under the name "Durolon®"having an average molecular weight of 22,000;
c) butadiene rubber consisting of a butadiene/styrene/methylmethacrylate graft- copolymer having a cross-linking degree (gel content) of 94% by weight and a glass transition temperature (Tg) of -80°C, sold by Rohm & Haas under the name Paraloid® EXL 2607.

The weight ratios of the above components are indicated in Table 1.

By cutting the strands leaving the extruder, granules were obtained, which were dried for 2-4 hours at 80°-90°C.

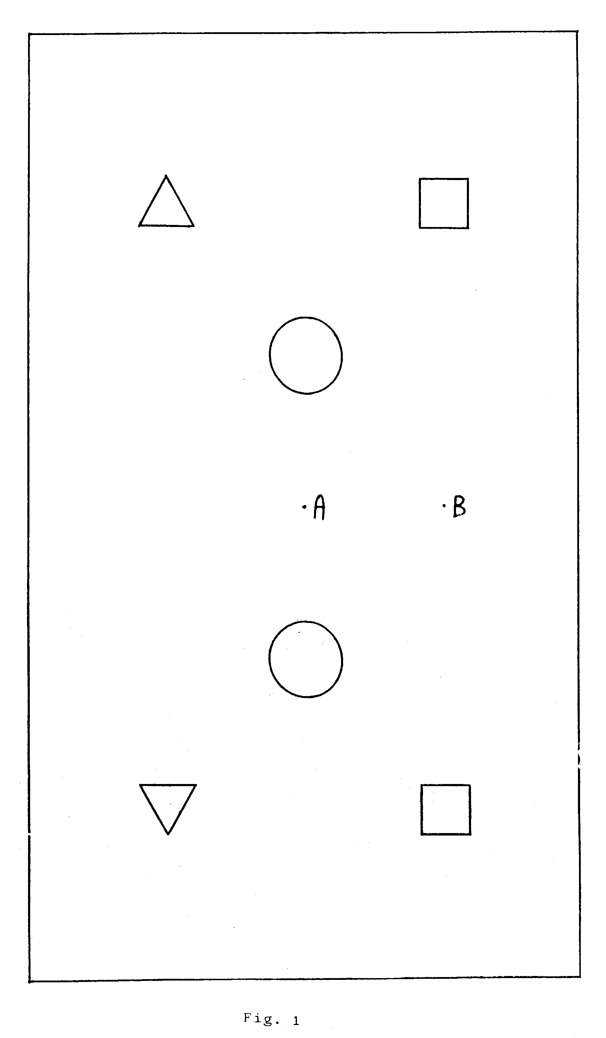

In order to evaluate the tenacity in the flow joining areas, the granules were injection molded in a press(NEGRI & BOSSI V 15-23 FA)with a tablet mold. There was molded a rectangular tablet, shown in Figure 1, measuring 250x150x2 mm and provided with 6 holes. Of these holes, two were square, two circular and two triangular. The two circular holes had a diameter of 20 mm,were equidistant from the tablet centre and arranged on a vertical line passing through the centre (A) of the tablet and through the centres of the two holes. The distance between the two holes was 80 mm. The two square holes had sides 13 mm long, and were arranged on the right side of the tablet and symmetrically to the horizontal center line of the tablet. The distance between the centres of the two squares was 160 mm. The two triangular holes were equilateral, with sides of 15 mm, they were arranged on the left side of the tablet and symmetrically to the horizontal center line of the tablet. The distance between the two centers of the triangles was 160 mm.

Fig. 1 shows the front view of the tablet.

On said tablet the tenacity was determined in point A, corresponding to the tablet center, and in point B, corresponding to the intersection of the horizontal line passing through center A of the tablet and the vertical line connecting the two centres of the squares.

The tenacity was measured by means of the "ball drop" test according to standard DIN 53443.

For a determination of the other characteristics, the granules were injection molded at a temperature of 210°C in a NEGRI & BOSSI press V-17-110 FA in order to obtain the test pieces having the dimensions required by the standards.

The measured characteristics and the methods used were as follows :

### Mechanical properties

The tensile strength and the elastic modulus, according to standard ASTM D 368, and the IZOD resilience on notched bar at 23°C, according to standard ASTM D 256, were determined on test pieces having a thickness of 3.2 mm and 12.7 mm.

### Thermal properties

The VICAT B softening temperature (5 kg in oil) was determined according to standard ISO 306.

### Rheological properties

The melt-index was determined according to standard ASTM D 1238, at 260°C and 5 kg.

The measured values are reported in the following table I.

**TABLE I**

| COMPOSITION | | **EXAMPLES** | | | | |
|---|---|---|---|---|---|---|
| | | 1 | 2 | 3 | 4 | 5 |
| a) Styrene copolymer | | 40 | 35 | 46 | 25 | 70 |
| b) Polycarbonate "DUROLON®" | | 60 | 60 | 46 | 70 | 20 |
| c) Paraloid® EXL 2607 | | - | 5 | 8 | 5 | 10 |
| Tenacity Area A | J | 4 | 55 | 45 | 60 | 40 |
| (Ball drop) Area B | J | 39 | 60 | 50 | 65 | 45 |

| Mechanical properties | | | | | | |
|---|---|---|---|---|---|---|
| - Tensile strength | | | | | | |
| tensile yield strength | N/mm² | 48 | 44 | 42 | 46 | 38 |
| ult. tensile strength | N/mm² | 49 | 45 | 40 | 48 | 40 |
| elastic modulus | N/mm² | 2200 | 1900 | 1900 | 2100 | 1700 |

| - IZOD resilience | | | | | | |
|---|---|---|---|---|---|---|
| 1/2" x 1/8" | J/m | 590 | 550 | 500 | 560 | 400 |
| 1/2" x 1/2" | J/m | 350 | 450 | 420 | 460 | 350 |

| Thermal properties | | | | | | |
|---|---|---|---|---|---|---|
| - Vicat B | °C | 120 | 125 | 115 | 130 | 100 |

| Rheological properties | | | | | | |
|---|---|---|---|---|---|---|
| - Melt index | g/10' | 21 | 18 | 15 | 10 | 20 |

## Claims

1. Mixtures based on styrene copolymers and having improved mechanical characteristics, comprising (a) an impact-resistant styrene copolymer containing from 2 to 35% by weight of at least one ethylenically unsaturated nitrile, from 20 to 40% by weight of at least one olefinic elastomer having a iodine number higher than 5 and up to 40, and from 15 to 73% by weight of at least one styrene monomer, (b) an aromatic polycarbonate in a weight ratio of styrene copolymer to polycarbonate of from 10:90 to 90:10 and, as compatibilizing agent, (c) from 1 to 20% by weight, based on the mixture, of a graft-copolymer having an elastomeric core with a second order glass transition temperature (Tg) lower than 10°C being selected from polybutadiene and copolymers of butadiene with styrene, isoprene and/or acrylonitrile wherein the butadiene content is higher than 40% by moles, onto which vinyl monomer chains are grafted.

2. Mixtures according to claim 1, comprising (a) an impact-resistant styrene copolymer containing from 10 to 35% by weight of at least one ethylenically unsaturated nitrile, from 20 to 40% by weight of at least one olefinic elastomer having a iodine number higher than 5 and up to 40, and from 25 to 70% by weight of at least one styrene monomer, (b) an aromatic polycarbonate in a weight ratio of styrene copolymer to polycarbonate of from 70:30 to 30:70 and (c) from 3 to 10% by weight, based on the mixture, of a graft-copolymer with an elastomeric core having a second order glass transition temperature (Tg) lower than 10°C being selected from polybutadiene and copolymers of butadiene with styrene, isoprene and/or acrylonitrile wherein the butadiene content is higher than 40% by moles, onto which vinyl monomer chains are grafted.

3. Mixtures according to anyone of claims 1 and 2, in which the olefinic elastomer is a rubber-like copolymer having a Mooney viscosity ranging from 10 to 150 ML-4 at 100°C.

4. Mixtures according to anyone of claims 1 to 3, in which the olefinic elastomer is an ethylene/propylene/non-conjugated diene copolymer having a Mooney viscosity ranging from 30 to 90 ML-4 at 100°C.

5. Mixtures according to anyone of the preceding claims, in which the styrene monomer has the general formula : 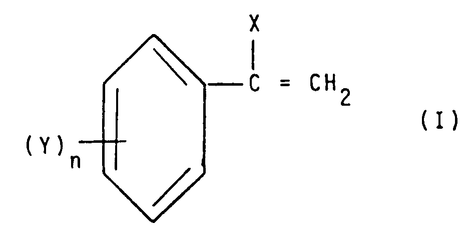 in which:
X is hydrogen or an alkyl radical having 1 to 4 carbon atoms;
Y is hydrogen, a halogen or an alkyl radical having 1 to 4 carbon atoms, and
n is 0 or an integer from 1 to 5.

6. Mixtures according to anyone of the preceding claims, in which the copolymerized ethylenically unsaturated nitrile is acrylonitrile.

7. Mixtures according to anyone of the preceding claims, in which the aromatic polycarbonate is derived from a bisphenol having formula (II): 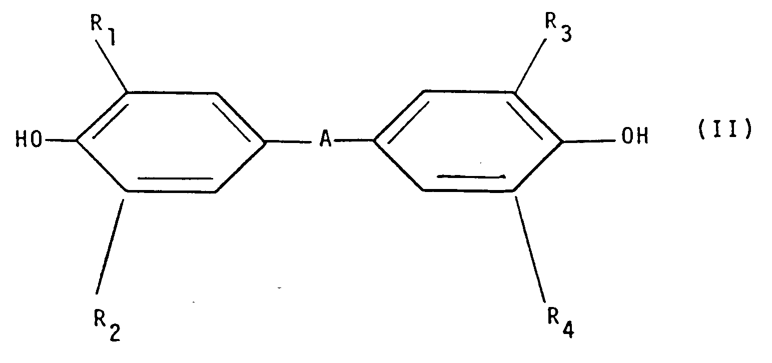 wherein R₁,R₂,R₃ and R₄ each independently represent hydrogen, an alkyl radical containing from 1 to 4 carbon atoms or halogen; and A represents -O-, -CO-, -SO₂-, an alkylene radical containing from 2 to 10 carbon atoms, an alkylidene radical containing from 2 to 10 carbon atoms, a cycloalkylene radical containing from 5 to 15 carbon atoms, a cycloalkylidene radical containing from 5 to 15 carbon atoms or a radical of formula (III):

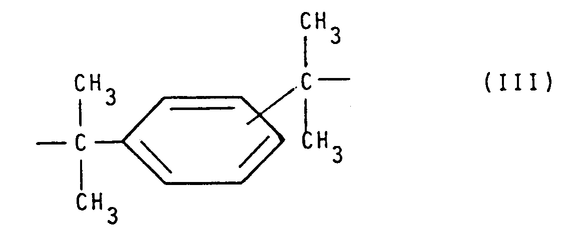

8. Mixtures according to anyone of the preceding claims, wherein the aromatic polycarbonate has an average molecular weight equal to or higher than about 10,000, preferably from about 10,000 to about 200,000.

9. Mixtures according to anyone of the preceding claims, wherein the graft-copolymer is of the core-shell type and comprises from about 25 to about 95% by weight of an elastomeric core and from about 75 to about 5% by weight of grafted chains of vinyl monomers.

10. Mixtures according to anyone of the preceding claims, wherein the vinyl monomers grafted onto the elastomeric core are selected from acrylic acid derivatives, methacrylic acid derivatives, vinyl-aromatic compounds, vinyl cyanide compounds, polyfunctional derivatives and mixtures thereof.

11. Mixtures according to any of the preceding claims, where in the grafted copolymer has a second order transition temperature lower than -10°C, preferably lower than -50°C, and a cross-linking degree of from 50% to 99%.

12. Mixtures according to anyone of the preceding claims, wherein the graft-copolymer has an elastomer content of from 35% to 95% by weight.

13. Mixtures according to anyone of the preceding claims, wherein the graft-copolymer is a three-stage copolymer having a rubber-like core based on butadiene, a second stage derived from styrene and a final stage or shell derived from methyl methacrylate and 1,3-butylene-glycol dimethacrylate.

14. Mixtures according to anyone of the preceding claims,additionally containing stabilizers, UV-stabilizers, plasticizers, lubricants, anti-flame agents, antistatic agents and/or glass fibres or other inorganic fillers.

## Patentansprüche

1. Mischungen auf der Basis von Styrolcopolymeren mit verbesserten mechanischen Eigenschaften, die umfassen:
(a) ein schlagfestes Styrolcopolymer, das von 2 bis 35 Gew.-% wenigstens eines ethylenisch ungesättigten Nitrils, von 20 bis 40 Gew.-% wenigstens eines olefinischen Elastomers mit einer Jodzahl von mehr als 5 und bis zu 40, und von 15 bis 73 Gew.-% wenigstens eines Styrolmonomers enthält,
(b) ein aromatisches Polycarbonat in einem Gewichtsverhältnis von Styrolcopolymer zu Polycarbonat von 10:90 bis 90:10 und, als Kompatibilität-verleihendes Mittel
(c) von 1 bis 20 Gew.-%, bezogen auf die Mischung, eines Pfropfcopolymers mit einem Elastomerkern mit einer Glasübergangstemperatur (Tg) zweiter Ordnung von weniger als 10° C, ausgewählt aus Polybutadien und Copolymeren von Butadien mit Styrol, Isopren und/oder Acrylnitril, worin der Butadiengehalt höher ist als 40 Mol-%, auf welchen Vinylmonomerketten aufgepfopft sind.

2. Mischungen nach Anspruch 1, die umfassen:
(a) ein schlagfestes Styrolcopolymer, das von 10 bis 35 Gew.-% wenigstens eines ethylenisch ungesättigten Nitrils, von 20 bis 40 Gew.-% wenigstens eines olefinischen Elastomers mit einer Jodzahl von mehr als 5 und bis zu 40, und von 25 bis 70 Gew.-% wenigstens eines Styrolmonomers enthält,
(b) ein aromatisches Polycarbonat in einem Gewichtsverhältnis von Styrolcopolymer zu Polycarbonat von 70:30 bis 30:70 und
(c) von 3 bis 10 Gew.-%, bezogen auf die Mischung, eines Pfropfcopolymers mit einem Elastomerkern mit einer Glasübergangstemperatur (Tg) zweiter Ordnung von weniger als 10° C, ausgewählt aus Polybutadien und Copolymeren von Butadien mit Styrol, Isopren und/oder Acrylnitril, worin der Butadiengehalt höher ist als 40 Mol-%, auf welchen Vinylmonomerketten aufgepfopft sind.

3. Mischungen nach einem der Ansprüche 1 und 2, worin das olefinische Elastomer ein kautschukartiges Copolymer mit einer Mooney-Viskosität im Bereich von 10 bis 150 ML-4 bei 100° C ist.

4. Mischungen nach einem der Ansprüche 1 bis 3, worin das olefinische Elastomer ein Ethylen/Propylen/nicht-konjugiertes Dien-Copolymer mit einer Mooney-Viskosität im Bereich von 30 bis 90 ML-4 bei 100° C ist.

5. Mischungen nach einem der vorhergehenden Ansprüche, worin das Styrolmonomer die allgemeine Formel: 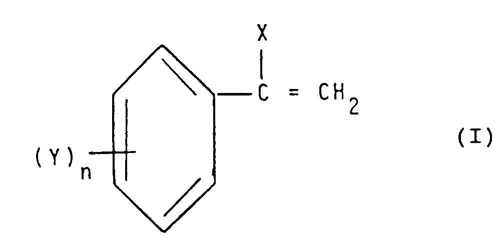 aufweist, worin:
X Wasserstoff oder eine Alkylgruppe mit 1 bis 4 Kohlenstoffatomen ist;
Y Wasserstoff, eine Halogen- oder eine Alkylgruppe mit 1 bis 4 Kohlenstoffatomen ist und
n = 0 oder eine ganze Zahl von 1 bis 5 ist.

6. Mischungen nach einem der vorhergehenden Ansprüche, worin das copolymerisierte ethylenisch ungesättigte Nitril Acrylnitril ist.

7. Mischungen nach einem der vorhergehenden Ansprüche, worin das aromatische Polycarbonat abgeleitet ist von einem Bisphenol der Formel (II): 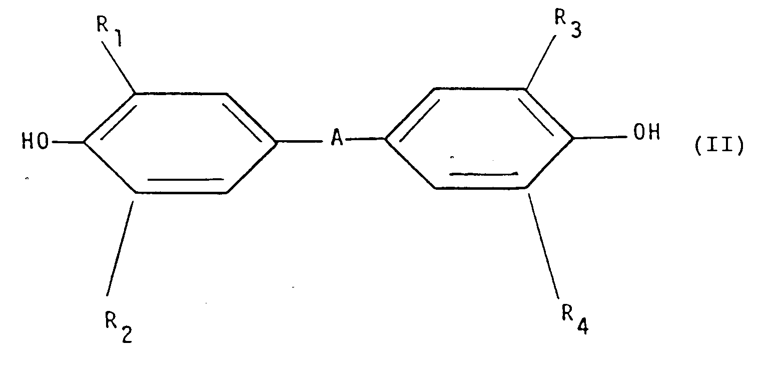 worin R₁, R₂, R₃ und R₄ jeweils unabhängig voneinander Wasserstoff, eine Alkylgruppe mit 1 bis 4 Kohlenstoffatomen oder Halogen bedeuten, und A = -O-, -CO-, -SO₂-, eine Alkylengruppe mit 2 bis 10 Kohlenstoffatomen, eine Alkylidengruppe mit 2 bis 10 Kohlenstoffatomen, eine Cycloalkylengruppe mit 5 bis 15 Kohlenstoffatomen, eine Cycloalkylidengruppe mit 5 bis 15 Kohlenstoffatomen oder einen Gruppe der Formel (III) darstellt:

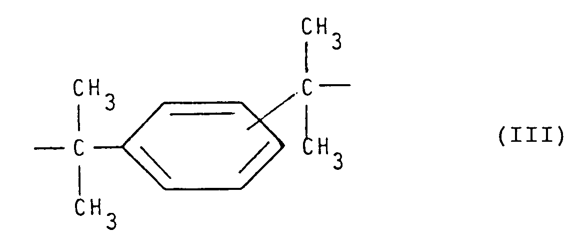

8. Mischungen nach einem der vorhergehenden Ansprüche, worin das aromatische Polycarbonat ein durchschnittliches Molekulargewicht von etwa 10.000 oder mehr, vorzugsweise von etwa 10.000 bis etwa 200.000, aufweist.

9. Mischungen nach einem der vorhergehenden Ansprüche, worin das Pfropfcopolymer ein solches vom Kern-Schale-Typ ist und von etwa 25 bis etwa 95 Gew.-% eines elastomeren Kerns und von etwa 75 bis etwa 5 Gew.-% einer aufgepfropften Kette von Vinylmonomeren umfaßt.

10. Mischungen nach einem der vorhergehenden Ansprüche, worin die auf dem elastomeren Kern aufgepfropften Vinylmonomere ausgewählt werden aus Acrylsäure-Derivaten, Methacrylsäure-Derivaten, aromatischen Vinylverbindungen, Vinyl-cyanid-Verbindungen, polyfunktionellen Derivaten und Mischungen von diesen.

11. Mischungen nach einem der vorhergehenden Ansprüche, worin das Propfcopolymer eine Glasübergangstemperatur zweiter Ordnung von weniger als -10°C, vorzugsweise weniger als - 50° C und einen Vernetzungsgrad von 50% bis 99% aufweist.

12. Mischungen nach einem der vorhergehenden Ansprüche, worin das Pfropfcopolymer einen Elastomergehalt von 35 Gew.% bis 95 Gew.-% aufweist.

13. Mischungen nach einem der vorhergehenden Ansprüche, worin das Pfropfcopolymer ein Dreistufen-Copolymer ist, das einen kautschukartigen Kern auf der Basis von Butadien, eine zweite Phase abgeleitet von Styrol und eine oberste Phase oder Schale aus Methylmethacrylat und 1,3-Butylenglykol-dimethacrylat aufweist.

14. Mischungen nach einem der vorhergehenden Ansprüche, die zusätzlich Stabilisatoren, UV-Stabilisatoren, Weichmacher, Gleitmittel, flammhemmende Mittel, antistatische Mittel und/oder Glasfasern oder andere anorganische Füllmittel enthalten.

## Revendications

1. Mélanges à base de copolymères styréniques, présentant des caractéristiques mécaniques améliorées, comprenant (a) un copolymère styrénique résistant aux chocs, contenant de 2 à 35% en poids d'au moins un nitrile éthyléniquement insaturé, de 20 à 40% en poids d'au moins un élastomère oléfinique, ayant un indice d'iode supérieur à 5 et pouvant s'élever jusqu'à 40, et de 15 à 73% en poids d'au moins un monomère styrénique, (b) un polycarbonate aromatique, le rapport en poids du copolymère styrénique au polycarbonate étant de 10:90 à 90:10, et, en tant qu'agent assurant la compatibilité, (c) de 1 à 20% en poids, par rapport au mélange, d'un copolymère greffé ayant un coeur élastomère présentant une température de transition vitreuse du second ordre (Tg) inférieure à 10°C et choisi parmi les polybutadiènes et les copolymères du butadiène avec du styrène, de l'isoprène et/ou de l'acrylonitrile, dont la teneur en butadiène est supérieure à 40% en moles, coeur élastomère sur lequel sont greffées des chaînes de monomères vinyliques.

2. Mélanges selon la revendication 1, comprenant (a) un copolymère styrénique résistant aux chocs, contenant de 10 à 35% en poids d'au moins un nitrile éthyléniquement insaturé, de 20 à 40% en poids d'au moins un élastomère oléfinique, ayant un indice d'iode supérieur à 5 et pouvant s'élever jusqu'à 40, et de 25 à 70% en poids d'au moins un monomère styrénique, (b) un polycarbonate aromatique, le rapport en poids du copolymère styrénique au polycarbonate étant de 70:30 à 30:70, et (c) de 3 à 10% en poids, par rapport au mélange, d'un copolymère greffé ayant un coeur élastomère présentant une température de transition vitreuse du second ordre (Tg) inférieure à 10°C et choisi parmi les polybutadiènes et les copolymères du butadiène avec du styrène, de l'isoprène et/ou de l'acrylonitrile, dont la teneur en butadiène est supérieure à 40% en moles, coeur élastomère sur lequel sont greffées des chaînes de monomères vinyliques.

3. Mélanges selon la revendication 1 ou 2, pour lesquels l'élastomère oléfinique est un copolymère caoutchouteux ayant une viscosité Mooney à 100°C comprise dans l'intervalle allant de 10 à 150 ML-4.

4. Mélanges selon l'une quelconque des revendications 1 à 3, pour lesquels l'élastomère oléfinique est un copolymère éthylène/propylène/diène non conjugué, ayant une viscosité Mooney à 100°C comprise dans l'intervalle allant de 30 à 90 ML-4.

5. Mélanges selon l'une quelconque des revendications précédentes, pour lesquels le monomère styrénique répond à la formule générale : 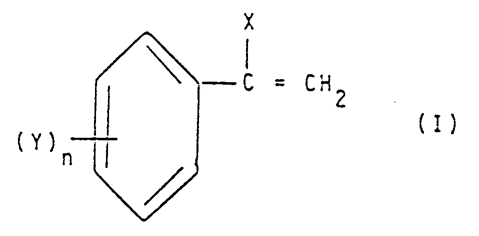 dans laquelle :
X représente un atome d'hydrogène ou un groupe alkyle ayant 1 à 4 atomes de carbone,
Y représente un atome d'hydrogène ou d'halogène, ou un groupe alkyle ayant 1 à 4 atomes de carbone, et
n est égal à 0 ou représente un nombre entier de 1 à 5.

6. Mélanges selon l'une quelconque des revendications précédentes, pour lesquels le nitrile éthyléniquement insaturé copolymérisé est l'acrylonitrile.

7. Mélanges selon l'une quelconque des revendications précédentes, pour lesquels le polycarbonate aromatique provient d'un bisphénol répondant à la formule (II) : 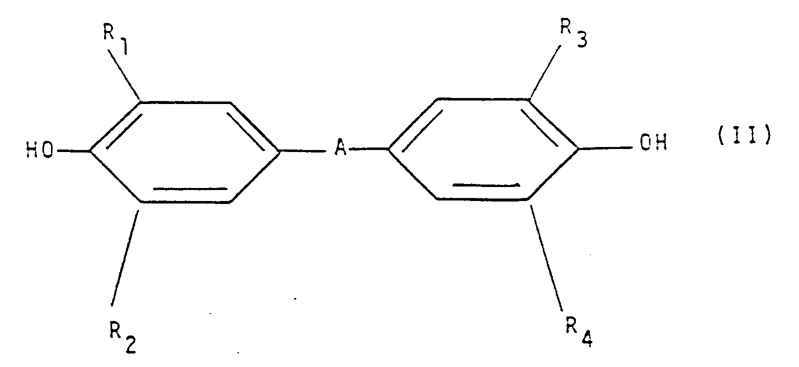 dans laquelle R₁, R₂, R₃ et R₄ représentent chacun, indépendamment, un atome d'hydrogène ou d'halogène, ou un groupe alkyle contenant de 1 à 4 atomes de carbone, et A représente -O-, -CO-, -SO₂-, un groupe alkylène contenant de 2 à 10 atomes de carbone, un groupe alkylidène contenant de 2 à 10 atomes de carbone, un groupe cycloalkylène contenant de 5 à 15 atomes de carbone, un groupe cycloalkylidène contenant de 5 à 15 atomes de carbone, ou un groupe de formule (III) :

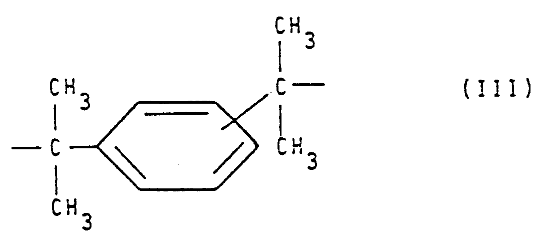

8. Mélanges selon l'une quelconque des revendications précédentes, pour lesquels le polycarbonate aromatique présente une masse moléculaire moyenne égale ou supérieure à environ 10.000, de préférence d'environ 10.000 à environ 200.000.

9. Mélanges selon l'une quelconque des revendications précédentes, pour lesquels le copolymère greffé est du type coeur-enveloppe et comprend d'environ 25 à environ 95% en poids d'un coeur élastomère et d'environ 75 à environ 5% en poids de chaînes de monomères vinyliques greffés.

10. Mélanges selon l'une quelconque des revendications précédentes, pour lesquels les monomères vinyliques greffés sur le coeur élastomère sont choisis parmi les dérivés de l'acide acrylique, les dérivés de l'acide méthacrylique, les composés aromatiques vinyliques, les composés cyanovinyliques, les dérivés polyfonctionnels et leurs mélanges.

11. Mélanges selon l'une quelconque des revendications précédentes, pour lesquels le copolymère greffé présente une température de transition du second ordre inférieure à -10°C, de préférence inférieure à -50°C, et un degré de réticulation de 50% à 99%.

12. Mélanges selon l'une quelconque des revendications précédentes, pour lesquels le copolymère greffé a une teneur en élastomère de 35% à 95% en poids.

13. Mélanges selon l'une quelconque des revendications précédentes, pour lesquels le copolymère greffé est un copolymère à trois stades, présentant un coeur caoutchouteux à base de butadiène, un second stade provenant du styrène et un stade final ou enveloppe provenant du méthacrylate de méthyle et du diméthacrylate de 1,3-butylène-glycol.

14. Mélanges selon l'une quelconque des revendications précédentes, contenant en plus des stabilisants, des stabilisants vis-à-vis de l'action des rayons UV, des plastifiants, des lubrifiants, des agents ignifugeants, des agents antistatiques et/ou des fibres de verre ou autres charges minérales.
